# EUROPÄISCHE PATENTANMELDUNG

(11) **EP 2 175 099 A2**
(43) Veröffentlichungstag der Anmeldung: **14.04.2010**
(21) Anmeldenummer: 09171815.5
(22) Anmeldetag: 30.09.2009
(51) Int. Cl.: E06B 5/14, E06B 7/23, F25D 23/08

(54) **Hochsicherheitstür**

(30) Priorität: 07.10.2008 DE 102008042653
(71) Anmelder: caverion GmbH, 70499 Stuttgart (DE)
(72) Erfinder: Haslbeck, Hermann, 93104 Sünching (DE); Martinsteg, Hans, Dipl.-Ing., 52159 Roetgen (DE); Schweinheim, Claus, 50996 Köln (DE)
(74) Vertreter: Bauer, Dirk

(57) **Zusammenfassung**

Die Erfindung betrifft eine Hochsicherheitstür (1) umfassend ein Türblatt (2), das drehbar in oder an einer Zarge (4) gelagert ist, die mit einem umlaufenden Anschlag (8) ausgestattet ist, an dem das Türblatt (2) in seiner Schließstellung (12) umlaufend mit einem Randbereich (9) seiner dem Anschlag (8) zugewandten Ansichtsseite (10) anliegt, wobei zwischen dem Türblatt (2) und dem Anschlag (8) ein umlaufendes Dichtungselement (11) angeordnet ist, das mittels einer Verschlusseinrichtung (25) in der Schließstellung (12) des Türblatts (2) gegen den Anschlag (8) pressbar und davon entfernbar ist. Um eine Hochsicherheitstür bereit zu stellen, die sich durch ihre Einfachheit und ihre somit vergleichsweise geringen Herstellungskosten auszeichnet, ist gemäß der vorliegenden Erfindung vorgesehen, dass die Verschlusseinrichtung (25) über mindestens ein magnetisches Element verfügt, das das Dichtungselement (11) umlaufend über Magnetkraft gegen den Anschlag (8) oder gegen den Randbereich (9) des Türblatts (2) presst.

## Beschreibung

### Einleitung

Die Erfindung betrifft eine Hochsicherheitstür umfassend ein Türblatt, das drehbar in oder an einer Zarge gelagert ist, die mit einem umlaufenden Anschlag ausgestattet ist, an dem das Türblatt in seiner Schließstellung umlaufend mit einem Randbereich einer seiner Ansichtsseiten anliegt, wobei zwischen dem Türblatt und dem Anschlag ein umlaufendes Dichtungselement angeordnet ist, wobei das Dichtungselement mittels einer Verschlusseinrichtung in der Schließstellung des Türblatts gegen den Anschlag pressbar und davon entfernbar ist.

### Stand der Technik

Derartige Hochsicherheitstüren sind aus dem allgemeinen Stand der Technik bekannt und werden insbesondere in Räumen eingesetzt, für die hohe Sicherheitsbestimmungen bestehen, wie beispielsweise in mikrobiologischen Laboren.

Beispielsweise ist aus der DE 20 2006 004 075 U1 eine Hochsicherheitstür bekannt, deren Türblatt umlaufend mit einer Dichtungseinrichtung ausgestattet ist, die von einer Offenstellung in eine Schließstellung überführbar ist, in der die Dichtungseinrichtung gegen ein entsprechendes Anschlagelement gepresst wird. Hierzu besitzt die Dichtungseinrichtung ein Dehnelement, das über eine Druckluftleitung bedarfsweise mit Druckluft versorgt wird. Soll das Türblatt der Hochsicherheitstür in seine Schließstellung überführt werden, so wird dem Dehnelement Druckluft zugeleitet, so dass sich dieses ausweitet und ein an der Dichtungseinrichtung befindliches Abdichtelement gegen das Anschlagelement gepresst wird.

Die zur Erreichung der Dichtigkeit von Hochsicherheitstüren angewandte Technik ist meist aufwändig, wartungs- und somit kostenintensiv. Insbesondere bei der vorbeschriebenen Hochsicherheitstür ist die Qualität der Dichtigkeit der geschlossenen Tür abhängig von der Beschaffenheit und Qualität des Abdichtelementes als solches sowie von dem Dehnelement.

Darüber hinaus ergibt sich bei herkömmlichen Hochsicherheitstüren der Nachteil, dass lokale Toleranzen, die zwischen dem Türblatt und dem Anschlag bestehen, nur schwer mit der mechanisch auf das Dichtungselement wirkenden Anpressung ausgeglichen werden können, was schlimmstenfalls zu Undichtigkeiten der Hochsicherheitstüren führen kann.

### Aufgabe

Unter Berücksichtigung des vorstehend beschriebenen Standes der Technik liegt der Erfindung die Aufgabe zugrunde, eine Hochsicherheitstür bereit zu stellen, die sich durch ihre Einfachheit und ihre somit vergleichsweise geringen Herstellungskosten auszeichnet.

### Lösung

Erfindungsgemäß wird diese Aufgabe dadurch gelöst, dass die Verschlusseinrichtung über mindestens ein magnetisches Element verfügt, das das Dichtungselement umlaufend über Magnetkraft gegen den Anschlag oder gegen den Randbereich des Türblatts presst.

Auf diese Weise ist eine Dichtheit der Hochsicherheitstür mit einfachsten Mitteln hergestellt, wobei sich darüber hinaus mittels der erfindungsgemäßen Dichtung ein umlaufend gleichmäßiger Druck einstellt. An jeder Stelle der Dichtung wirkt die gleiche Kraft , die für eine Anlage derselben an den Anschlag beziehungsweise an den Randbereich des Türblatts sorgt. Baulich bedingte Toleranzen der Bauteile wirken sich demnach nicht negativ auf die Anlage der Dichtung aus, vielmehr werden eventuell bestehende Toleranzen ausgeglichen. Die Magnetkraft sollte so groß gewählt werden, dass einem Öffnen der Hochsicherheitstür ausgehend von ihrer Schließstellung ein merklicher Widerstand entgegen gebracht wird.

Die erfindungsgemäße Hochsicherheitstür zeichnet sich ferner dadurch aus, dass sie keine Fremdenergie benötigt und somit extrem ausfallsicher ist.

Ein weiterer Vorteil der erfindungsgemäßen Hochsicherheitstür ist, dass das Türblatt mit herkömmlichen Ecken ausgebildet sein kann und nicht etwa abgerundete Ecken aufweisen muss. Dies ist deshalb möglich, weil das Dichtungselement an jeder Stelle - also ebenfalls in den Ecken - senkrecht zu der Ebene des Türblatts beansprucht wird.

Eine besonders einfache Ausführung der erfindungsgemäßen Hochsicherheitstür sieht vor, dass die Verschlusseinrichtung mindestens eine innerhalb des Dichtungselementes angeordnete umlaufende Magnetleiste umfasst, die in der Schließstellung des Türblatts mit einem weiteren Element der Verschlusseinrichtung mit ferromagnetischen Eigenschaften, das im Bereich des Anschlags oder im Randbereich des Türblatts angeordnet ist, zusammenwirkt.

Alternativ kann jedoch vorgesehen werden, dass die Verschlusseinrichtung magnetisches Pulver umfasst, das in dem Material des Dichtungselementes eingebettet ist und das in der Schließstellung des Türblatts mit einem weiteren Element der Verschlusseinrichtung mit ferromagnetischen Eigenschaften, das im Bereich des Anschlags oder im Randbereich des Türblatts angeordnet ist, zusammenwirkt.

Wenn der Anschlag der erfindungsgemäßen Hochsicherheitstür aus ferromagnetischem Material besteht, kann dieser als das weitere Element der Verschlusseinrichtung mit ferromagnetischen Eigenschaften genutzt werden, so dass auf die Anordnung eines separaten ferromagnetischen Elements verzichtet werden kann.

Für den Fall, dass die Hochsicherheitstür besonders hohen Anforderungen genügen muss, kann es sinnvoll sein, dass die Verschlusseinrichtung mindestens einen aktivierbaren Elektromagneten umfasst, der innerhalb des Dichtungselementes oder im Bereich des Anschlags angeordnet ist, wobei der Elektromagnet im Schließzustand des Türblatts mit einer ferromagnetischen Leiste oder einer Magnetleiste, die im Bereich des Anschlags oder in dem Randbereich des Türblatts oder innerhalb des Dichtungselementes angeordnet ist, zusammenwirkt. Dabei kann die Magnetkraft derart hoch gewählt werden, dass ein manuelles Öffnen der verschlossenen Tür bei aktiviertem Elektromagneten nicht möglich ist. Erst nach Deaktivierung des Elektromagneten, durch die die zuvor wirkende magnetische Kraft wegfällt, ist ein Ablösen des Türblatts von dem Anschlag möglich. Auf diese Weise ist ein Öffnen und Schließen der Hochsicherheitstür sicher kontrollierbar.

Vorteilhafterweise ist das Dichtungselement in einer Nut des Türblatts oder in der Zarge angeordnet, wobei eine einem Nutgrund der Nut zugewandte Basisfläche des Dichtungselementes mit dem Nutgrund verklebt ist. Durch die Verklebung des Dichtungselementes ist es insbesondere bei einem Öffnungsvorgang der Tür in seiner Lage gesichert und kann nicht durch die auf sie wirkende magnetische Kraft aus der Nut gezogen werden. Um einem Herausreißen des Dichtungselementes ebenfalls vorzubeugen, kann die Nut in dem Türblatt oder in der Zarge auch als hinterschnittene Nut ausgebildet sein.

Eine Weiterbildung der erfindungsgemäßen Hochsicherheitstür sieht vor, dass das Dichtungselement eine Hohlkammerdichtung mit mindestens zwei Kammern ist, wobei in der der Basisfläche zugewandten Kammer Luft oder Gas und in der der Basisfläche abgewandten Kammer eine Magnetleiste oder eine ferromagnetische Leiste angeordnet ist. Die Hohlkammerdichtung ist über ihre Höhe komprimierbar, wodurch wiederum Toleranzen in den Bauteilen ausgeglichen werden können. Die Flexibilität der Hohlkammerdichtung wird im vorliegenden Fall nur von der Komprimierbarkeit der mit Luft oder Gas gefüllten Kammer erreicht und sorgt dafür, dass das Türblatt an jeder Stelle dicht an dem Anschlag anliegt.

In diesem Fall ist es besonders vorteilhaft, wenn die Hohlkammerdichtung an einer dem Nutgrund der Nut zugewandten Basisfläche sowie an Teilbereichen ihrer beiden Seitenflächen mit der Nutwandung verklebt ist, wobei sich die Teilbereiche vom Nutgrund aus maximal über eine Breite erstrecken, die der Breite eines dem Nutgrund zugewandten Steges der Hohlkammerdichtung entspricht. Somit ist die Flexibilität des Dichtungselementes, die maßgeblich durch die Komprimierbarkeit der mit Luft oder Gas gefüllten Kammer bestimmt wird, nicht eingeschränkt. Andererseits ist das Dichtungselement an einem großen Bereich seiner Außenfläche mit der Nut verklebt, wodurch es insbesondere beim Öffnungsvorgang des Türblatts in der Nut gehalten wird.

Gemäß einer besonders bevorzugten Weiterbildung der Erfindung ist zwischen dem Dichtungselement und dem Anschlag oder dem Randbereich des Türblatts eine umlaufende Prüfrille angeordnet ist, die über eine Leitung mit einem Dichtheitsprüfgerät verbunden werden kann. Das Dichtheitsprüfgerät dient der Feststellung der spezifizierten Dichtheit [z.B. max. Leckvolumenstrom 10l/(h x m²) bei einem Differenzdruck von 20 mbar], wozu es eine Volumenstrommesseinheit und eine Differenzdruckmesseinrichtung besitzt. Nach Überführung des Türblatts in seine Schließstellung wird zur Ermittlung des Leckvolumenstromes nach der Lecknachspeisemethode gemäß DIN 25 414 das Dichtheitsprüfgerät an eine Schnellverschlusskupplung, die sich auf der Türzarge befindet, angeschlossen und somit mit der Prüfrille verbunden. Über eine Handpumpe des Dichtheitsprüfgerätes wird die Prüfrille gefüllt, bis der vorgegebene Prüfdruck erreicht ist. Der zur Aufrechterhaltung des Prüfdrucks notwendige Nachspeise-Volumenstrom entspricht dem tatsächlichen Leckvolumenstrom. Dieser Vorgang der manuellen Dichtheitsprüfung ließe sich auch automatisieren, so dass bei Überschreitung des zulässigen Leckvolumenstromes ein Alarm ausgelöst würde.

Bei der vorgenannten Ausführungsform ist es insbesondere zweckmäßig, wenn die Hochsicherheitstür mit zwei umlaufende Magnetleisten oder ferromagnetische Leisten ausgestattet ist, wobei eine rechts und eine links der Prüfrille angeordnet ist. Somit werden gerade die Bereiche der Dichtung, die sich jeweils neben der Prüfrille befinden, gegen den Anschlag oder den Randbereich des Türblatts gepresst.

Es ist von Vorteil, wenn das Dichtungselement durch Abschnitte gebildet ist, wobei zwei in den Ecken des Türblatts aneinanderstoßende Abschnitte jeweils auf Gehrung geschnitten und dicht verklebt sind.

Schließlich sieht eine Weiterbildung der erfindungsgemäßen Hochsicherheitstür eine Identifikations- und/oder Zutrittskontrolle vor.

### Ausführungsbeispiel

Die Erfindung wird nachfolgend anhand einer erfindungsgemäßen Hochsicherheitstür, die in den Figuren dargestellt ist, näher erläutert.

### Es zeigt

- Fig. 1:: eine Ansicht einer Hochsicherheitstür,
- Fig. 2:: einen Horizontalschnitt durch die Hochsicherheitstür aus Figur 1 im Bereich der Zarge,
- Fig.3 bis 7:: wie Figur 2 mit jeweils alternativen Verschlusseinrichtungen und
- Fig. 8:: eine Prinzipskizze der erfindungsgemäßen Hochsicherheitstür mit verschiedenen Arten der Zugangskontrolle.

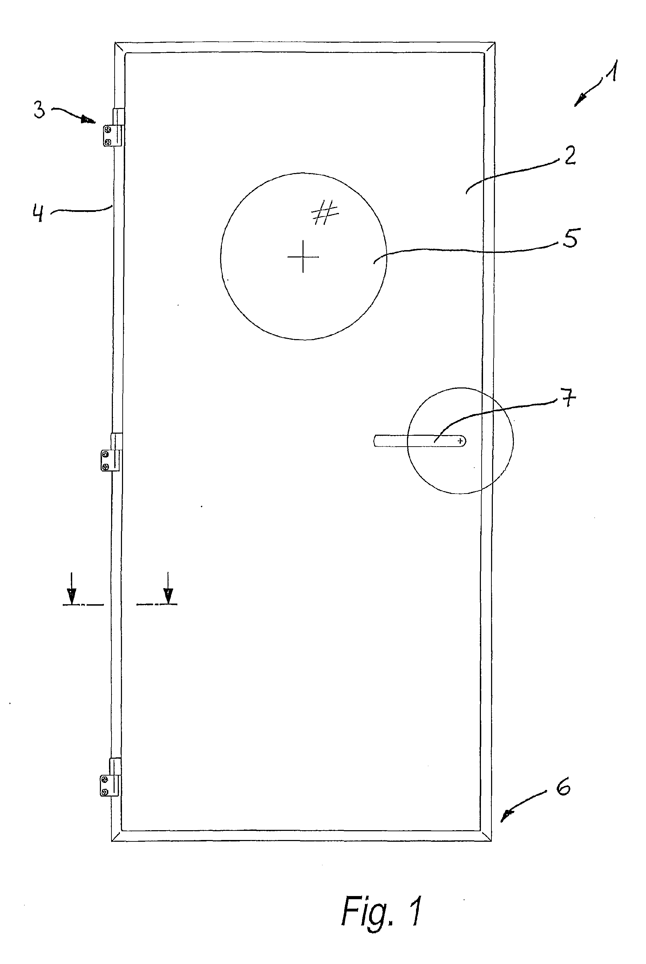

In der Figur 1 ist eine Ansicht einer erfindungsgemäßen Hochsicherheitstür 1 gezeigt, die über ein Türblatt 2 verfügt, das mittels drei Bändern 3 an einer umlaufenden Zarge 4 drehbar gelagert ist. Das Türblatt 2 verfügt über ein Sichtfenster 5 aus Glas, die eine Sichtverbindung zwischen dem Innenbereich I und dem Außenbereich A des mittels der Hochsicherheitstür 1 verschlossenen Raumes schafft.

Im Gegensatz zu herkömmlichen Hochsicherheitstüren, deren Türblatt aufgrund ihres Dichtprinzips mit abgerundeten "Ecken" ausgebildet sein müssen, weist die erfindungsgemäße Hochsicherheitstür 1 ein Türblatt 2 mit "echten" Ecken 6 auf. Sollte aus übergeordneten Gründen, zum Beispiel zur besseren Reinigung, die Notwendigkeit abgerundeter Ecken für Türblatt und Türzarge bestehen, wäre dies auch möglich.

Die Hochsicherheitstür 1 ist mit einem Handgriff 7 ausgestattet, bei dessen Betätigung auf bekannte Weise eine nicht in der Figur dargestellte Verriegelung, beispielsweise in Form einer Falle, aufgehoben wird. Alternativ kann durch Betätigung des Handgriffs 7 auch ein oder mehrere zwischen dem Türblatt 2 und der Zarge 4 befindliche Hebel in eine Richtung senkrecht zu dem Türblatt 2 verschoben werden, wodurch eine zusätzliche Abhebekraft zwecks Vereinfachung eines Öffnungsvorgangs erzeugt wird.

Die von der Zarge 4 eingefasste Öffnung in der Raumwand ist von ihren Abmessungen her kleiner als das Türblatt 2, so dass das Türblatt 2 umlaufend über die Öffnung übersteht. Hierdurch bildet die Zarge 4 umlaufend einen Anschlag 8 für Randbereiche 9 der dem Anschlag 8 zugewandten Ansichtseite 10 des Türblatts 2. Alternativ kann der Anschlag auch durch ein separates Bauteil gebildet werden, das mit der Zarge verbunden ist.

Der genaue Aufbau von Zarge 4, Türblatt 2 und insbesondere eines dazwischen befindlichen Dichtungselementes 11 geht aus den nachfolgend beschriebenen Figuren hervor:

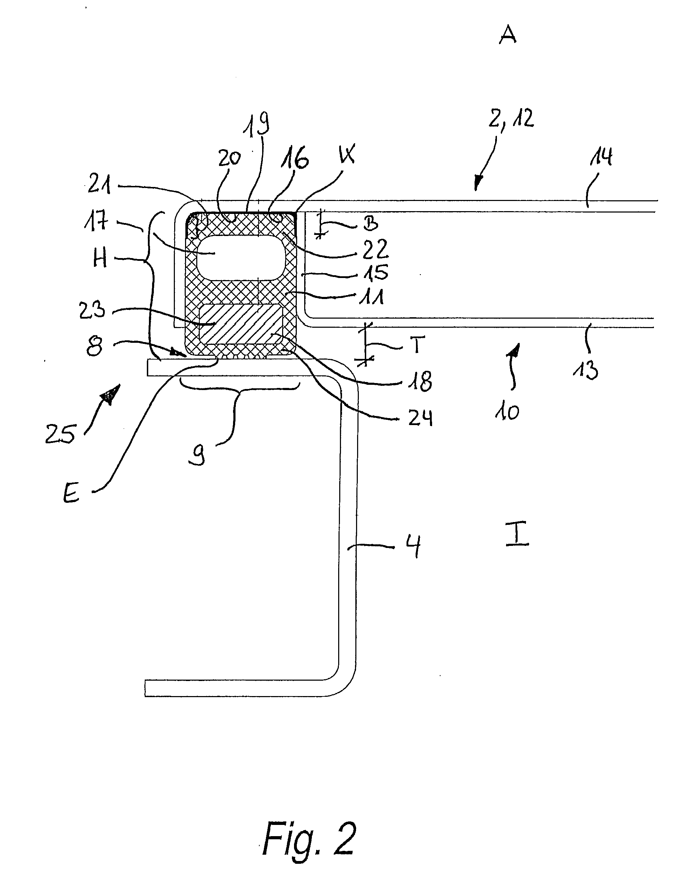

Gemäß der Figur 2, die einen Horizontalschnitt der erfindungsgemäßen Hochsicherheitstür 1 gemäß Figur 1 im Bereich einer Zarge 4 zeigt, wird die Zarge 4 durch ein im Querschnitt U-förmiges Profil aus einem Material mit ferromagnetischen Eigenschaften gebildet, das die Öffnung in der Raumwand einfasst. Das sich in der Figur 2 in seiner Schließstellung 12 befindliche Türblatt 2 wird durch zwei Bleche 13, 14 aus Edelstahl mit umlaufend um 90° umgekanteten Rändern 15 gebildet, wobei ein Blech 13 kleinere Außenabmessungen aufweist als das andere Blech 14. Das Blech 13 mit den kleineren Abmessungen wird so in das andere Blech 14 eingesetzt, dass sich seine Ränder 15 an der Grundfläche des größeren Blechs 14 abstützen. Hierdurch entsteht umlaufend eine Nut 16 in dem Türblatt 2, in die wiederum das Dichtungselement 11 in Form einer Hohlkammerdichtung mit zwei Kammern 17, 18 eingesetzt ist.

Um bei einem Öffnungsvorgang des Türblatts 2 ein Herausziehen des Dichtungselementes 11 aus der Nut 16 zu vermeiden, ist das Dichtungselement 11 auf seiner dem Nutgrund 19 zugewandten Basisseite 20 mit dem Nutgrund 19 verklebt (Klebeschicht K). Darüber hinaus ist das Dichtungselement 11 in Teilbereichen 21 seiner Seitenflächen mit der Nutwandung verklebt, wobei die Breite B der Verklebung der Breite B' eines dem Nutgrund 19 zugewandten Steges 22 des Dichtungselementes 11 entspricht. Hierdurch wird zwar die Lage des Dichtungselementes 11 in der Nut 16 fixiert, aber eine Flexibilität der Hohlkammerdichtung senkrecht zu der Ebene des Türblatts 2 bewahrt.

Während die dem Nutgrund 16 zugeordnete Kammer 17 des Dichtungselementes 11 mit Luft gefüllt ist, befindet sich in der der Zarge 4 zugewandten Kammer 18 eine Magnetleiste 23, die entsprechend des Dichtungselementes 11 umlaufend angeordnet ist. In der Schließstellung 12 des Türblatts 2 wirkt die Anziehungskraft der umlaufenden Magnetleiste 23 auf den aus ferromagnetischem Material bestehenden Anschlag 8 (Zarge 4), so dass eine der Zarge 4 zugewandte Kammerwand 24 des Dichtungselementes 11 auf den durch die Zarge 4 gebildeten Anschlag 8 gepresst wird und dort von der Oberfläche ausgehend mit wulstförmigen, langgestreckten Erhebungen E dichtend anliegt.

Das in senkrecht zu der Türblattebene verlaufende Richtung flexible Dichtungselement 11 liegt auf diese Weise umlaufend dicht an dem Anschlag 8 an, wobei eventuell bestehende Toleranzen in den Bauteilen ausgeglichen werden. Darüber hinaus wirkt umlaufend die gleiche Verschlusskraft auf das Dichtungselement 11.

In der Figur 2 ist zu erkennen, dass das Dichtungselement 11 eine größere Höhe H besitzt als die Nut 16 und demnach um einen gewissen Teil T aus der Nut 16 herausragt. Dies hat den Vorteil, dass das Türblatt 2 als solches nicht mit der Zarge 4 in Kontakt gerät, wodurch einem möglichen Verschleiß der Bauteiloberflächen vorgebeugt wird und ein geräuschloses Betätigen der Hochsicherheitstür 1 gewährleistet ist.

Die Magnetleiste 23 und die aus ferromagnetischem Material bestehende Zarge 4 bilden im vorliegenden Fall eine Verschlusseinrichtung 25, die über reine Magnetkraft funktioniert und daher von Fremdenergie unabhängig ist.

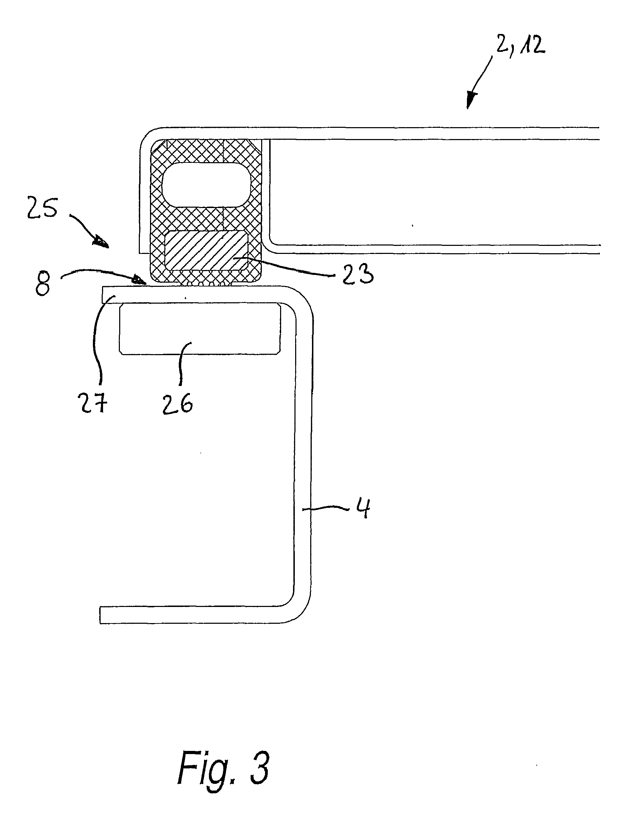

Alternativ kann die Verschlusseinrichtung 25 auch aus der in der Dichteinrichtung 11 befindlichen Magnetleiste 23 und einer Leiste 26 aus ferromagnetischem Material zusammengesetzt sein, wobei die Leiste 26 im Bereich des Anschlags 8 angeordnet ist. Ein beispielhafter Aufbau hierfür ist in der Figur 3 gezeigt, die analog zu Figur 2 einen Horizontalschnitt durch die Hochsicherheitstür 1 im Bereich der Zarge 4 zeigt, wobei die Verschlusseinrichtung 25 auf alternative Weise ausgebildet ist. Die Leiste 26 aus ferromagnetischem Material ist im Inneren der U-förmigen Zarge 4 angeordnet und liegt an einem dem Türblatt 2 zugewandten Schenkel 27 der Zarge 4 flächig an. Bei dieser Ausführungsform muss das U-förmige Profil der Zarge 4 nicht aus ferromagnetischem Material bestehen sondern kann beispielsweise aus austenitischem Edelstahl gefertigt sein.

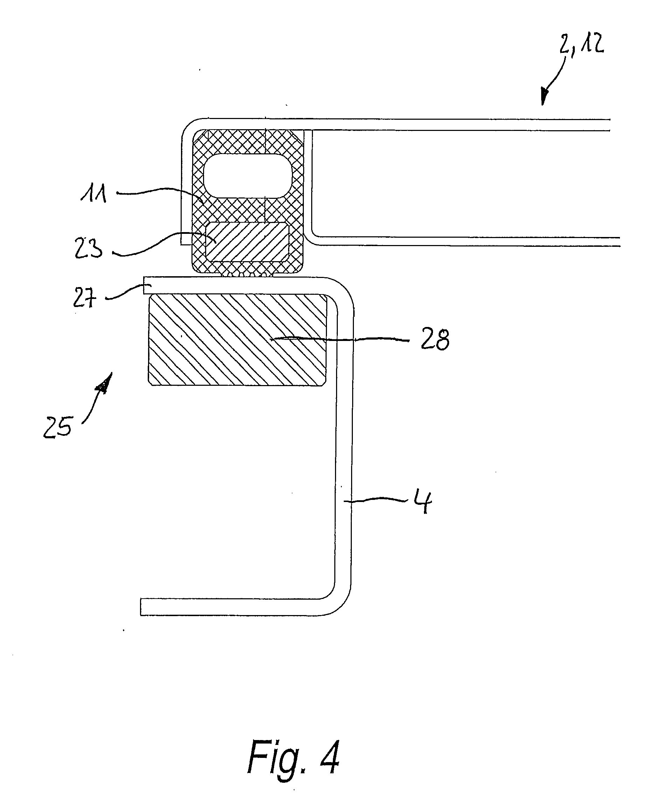

Eine dritte Möglichkeit zur Ausbildung der Verschlusseinrichtung 25 ist in der Figur 4 gezeigt. An dem dem Türblatt 2 zugewandten Schenkel 27 des U-förmigen Profils ist ein Elektromagnet 28 positioniert, der der Öffnungs- beziehungsweise der Schließstellung 12 des Türblatts 2 entsprechend ein- oder ausgeschaltet wird. Das Gegenstück des Elektromagneten 28 kann hierbei wiederum durch eine Magnetleiste 23 in dem Dichtungselement 11 gebildet werden, jedoch reicht hier auch eine Leiste mit ferromagnetischen Eigenschaften.

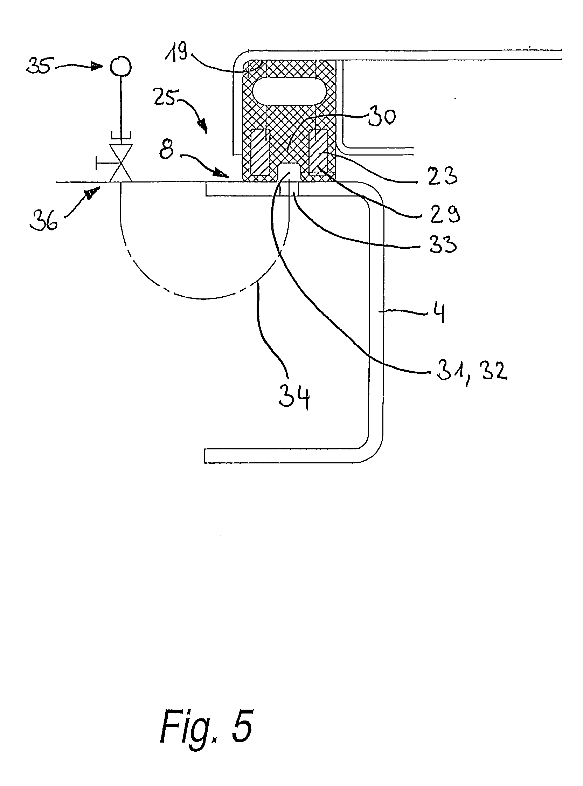

In Figur 5 ist eine vierte mögliche Verschlusseinrichtung 25 gezeigt. Das Dichtungselement 11, das abermals als Hohlkammerprofil ausgebildet ist, weist eine dem Nutgrund 19 zugewandte Kammer 17 und zwei dem Anschlag 8 zugewandte Kammern 29 auf, in die jeweils eine Magnetleiste 23 eingesetzt ist. Die Hohlkammerdichtung ist derart ausgeformt, dass die dem Anschlag 8 zugewandte Wandung 30 zwischen den beiden Kammern 29 eine Nut 31 aufweist. Befindet sich das Türblatt 2 in seiner Schließstellung 12, so verläuft zwischen Türblatt 2 und Anschlag 8 eine umlaufend geschlossene Prüfrille 32, deren Freiraum durch die Nut 31 gebildet wird. An einer Stelle der Hochsicherheitstür 1 ist die Zarge 4 mit einer Öffnung 33 versehen, von der aus eine erste Leitung 34 zu einem bedarfsweise anzuschließenden Dichtheitsprüfgerät 35 führt. Die erste Leitung 34 ist mit einer Schnellverschlusskupplung 36 zum Verschluss derselben versehen.

In der Schließstellung 12 des Türblatts 2 kann das Dichtheitsprüfgerät 35 zur Dichtheitsprüfung des Dichtsitzes des Türblatts 2 angeschlossen werden, wobei mittels einer Handpumpe in der Prüfrille 32 ein Überdruck aufgebaut werden kann. Der zur Aufrechterhaltung des Prüfdrucks notwendige Nachspeise-Volumenstrom entspricht dem tatsächlichen Leckvolumenstrom.

Dieser Vorgang der manuellen Dichtheitsprüfung ließe sich automatisieren, indem man bei geschlossener Tür permanent über ein Überdrucksystem (z. B. Druckluft) einen Volumenstrom aufgibt, der kleiner dem maximal zulässigen Leckvolumenstrom bei vorgegebenem Differenzdruck sein muss, ansonsten würde bei Überschreitung des zulässigen Leckvolumenstromes beziehungsweise Unterschreiten des vorgegebenen Differenzdruckes ein Alarm ausgelöst.

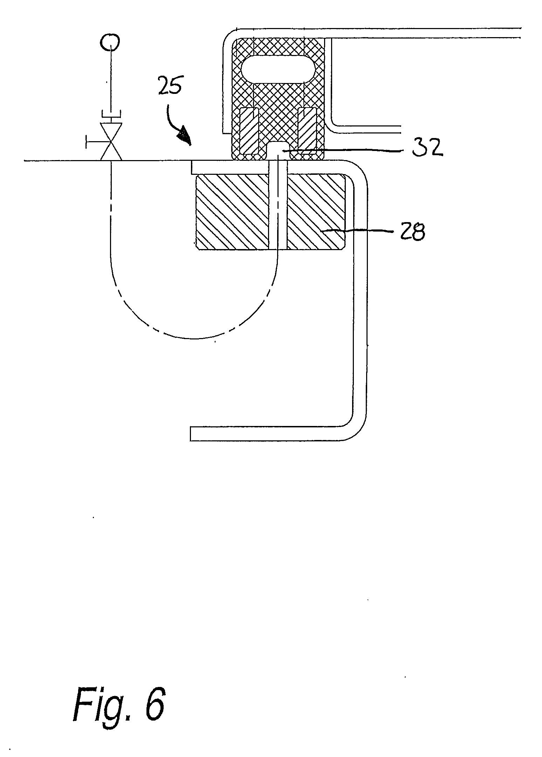

In der Figur 6 ist die Ausstattung der Hochsicherheitstür 1 mit einer Prüfrille 32 für den Fall gezeigt, bei dem die Verschlusseinrichtung 25 gemäß Figur 4 einen aktivierbaren Elektromagneten 28 umfasst.

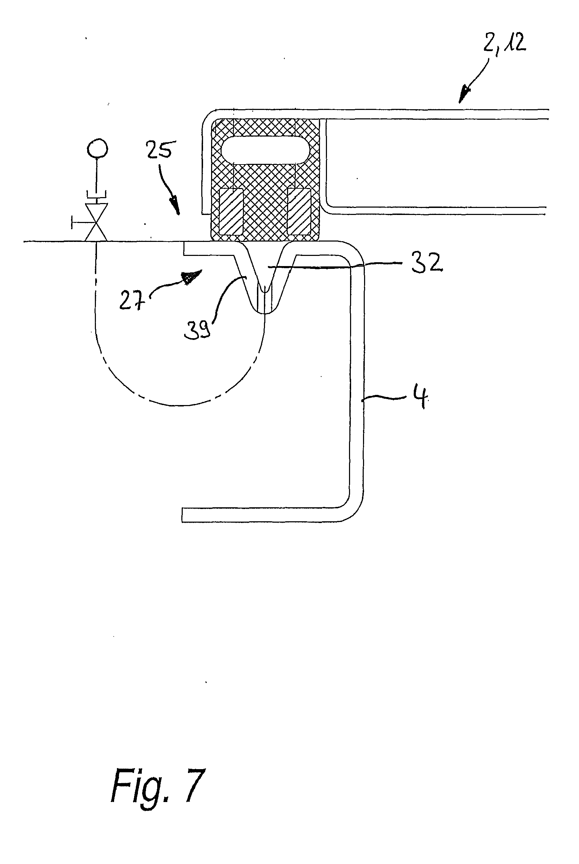

Eine alternative Ausbildung der Prüfrille 32 ist in der Figur 7 dargestellt, gemäß der die Prüfrille 32 durch eine umgeformte Zarge 4 im Bereich des Anschlags 8 gebildet wird. Der dem Türblatt 2 zugewandte Schenkel 27 der Zarge 4 weist im mittleren Bereich eine dreieckförmige Aufkantung 39 auf, deren Innenraum als umlaufende Prüfrille 32 dient.

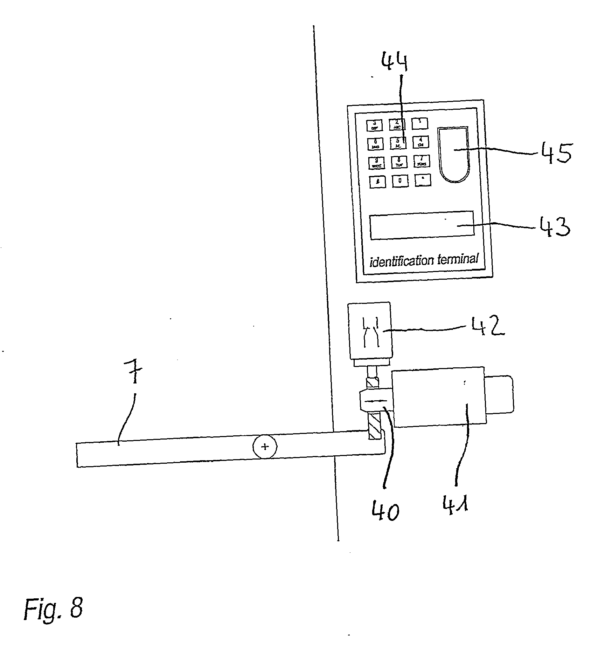

Die Figur 8 zeigt eine Prinzipskizze, mit welchen zusätzlichen Vorrichtungen die Hochsicherheitstür 1 zur Identifikations- beziehungsweise Zutrittskontrolle ausgestattet werden kann. Die Betätigung des Handgriffs 7 ist über einen vorgeschobenen Stift 40 eines Hubmagneten 41 unterbunden, wobei der Hubmagnet 41 mittels eines Endlagenschalters 42 deaktiviert werden kann. Der Endlagenschalter 42 wird wiederum über eine Zutrittskontrolle in Form eines Kartenlesegerätes 43, eines Passwortes, das über eine Tastatur 44 eingegeben wird, oder über eine biometrische Kennung 45 in Form eines Fingerabdrucks freigegeben.

### Bezugszeichenliste:

- 1: Hochsicherheitstür
- 2: Türblatt
- 3: Band
- 4: Zarge
- 5: Sichtfenster
- 6: Ecke
- 7: Handgriff
- 8: Anschlag
- 9: Randbereich
- 10: Ansichtsseite
- 11: Dichtungselement
- 12: Schließstellung
- 13: Blech
- 14: Blech
- 15: Rand
- 16: Nut
- 17: Kammer
- 18: Kammer
- 19: Nutgrund
- 20: Basisseite

- 21: Teilbereich
- 22: Steg
- 23: Magnetleiste
- 24: Kammerwand
- 25: Verschlusseinrichtung
- 26: Leiste
- 27: Schenkel
- 28: Elektromagnet
- 29: Kammer
- 30: Wandung
- 31: Nut
- 32: Prüfrille
- 33: Öffnung
- 34: Erste Leitung
- 35: Dichtheitsprüfgerät
- 36: Schnellverschlusskupplung
- 39: Aufkantung
- 40: Stift
- 41: Hubmagnet
- 42: Endlagenschalter
- 43: Kartenlesegerät

- 44: Tastatur
- 45: Biometrische Kennung
- A: Außenbereich
- I: Innenbereich
- B, B': Breite
- T: Teil
- E: Erhebung
- K: Klebeschicht
- H: Höhe

## Patentansprüche

1. Hochsicherheitstür (1) umfassend ein Türblatt (2), das drehbar in oder an einer Zarge (4) gelagert ist, die mit einem umlaufenden Anschlag (8) ausgestattet ist, an dem das Türblatt (2) in seiner Schließstellung (12) umlaufend mit einem Randbereich (9) seiner dem Anschlag (8) zugewandten Ansichtsseite (10) anliegt, wobei zwischen dem Türblatt (2) und dem Anschlag (8) ein umlaufendes Dichtungselement (11) angeordnet ist, das mittels einer Verschlusseinrichtung (25) in der Schließstellung (12) des Türblatts (2) gegen den Anschlag (8) pressbar und davon entfernbar ist, **dadurch gekennzeichnet, dass** die Verschlusseinrichtung (25) über mindestens ein magnetisches Element verfügt, das das Dichtungselement (11) umlaufend über Magnetkraft gegen den Anschlag (8) oder gegen den Randbereich (9) des Türblatts (2) presst.

2. Hochsicherheitstür gemäß Anspruch 1, **dadurch gekennzeichnet, dass** die Verschlusseinrichtung (25) mindestens eine innerhalb des Dichtungselementes (11) angeordnete umlaufende Magnetleiste (23) umfasst, die in der Schließstellung (12) des Türblatts (2) mit einem weiteren Element der Verschlusseinrichtung (25) mit ferromagnetischen Eigenschaften, das im Bereich des Anschlags (8) oder im Randbereich (9) des Türblatts (2) angeordnet ist, zusammenwirkt.

3. Hochsicherheitstür gemäß Anspruch 1, **dadurch gekennzeichnet, dass** die Verschlusseinrichtung magnetisches Pulver umfasst, das in dem Material des Dichtungselementes eingebettet ist und das in der Schließstellung des Türblatts mit einem weiteren Element der Verschlusseinrichtung mit ferromagnetischen Eigenschaften, das im Bereich des Anschlags oder im Randbereich des Türblatts angeordnet ist, zusammenwirkt.

4. Hochsicherheitstür gemäß einem der Ansprüche 1 bis 3, **dadurch gekennzeichnet, dass** der Anschlag (8) aus ferromagnetischem Material besteht und dass er das weitere Element der Verschlusseinrichtung (25) mit ferromagnetischen Eigenschaften bildet.

5. Hochsicherheitstür gemäß Anspruch 1, **dadurch gekennzeichnet, dass** die Verschlusseinrichtung (25) mindestens einen aktivierbaren Elektromagneten (28) umfasst, der innerhalb des Dichtungselementes (11) oder im Bereich des Anschlags (8) angeordnet ist, wobei der Elektromagnet (28) im Schließzustand (12) des Türblatts (2) mit einer ferromagnetischen Leiste oder einer Magnetleiste (23), die im Bereich des Anschlags (8) oder in dem Randbereich (9) des Türblatts (2) oder innerhalb des Dichtungselementes (11) angeordnet ist, zusammenwirkt.

6. Hochsicherheitstür gemäß einem der Ansprüche 1 bis 5, **dadurch gekennzeichnet, dass** das Dichtungselement (11) in einer Nut (16) des Türblatts (2) oder der Zarge (4) angeordnet ist, wobei eine einem Nutgrund (19) der Nut (16) zugewandte Basisfläche (20) des Dichtungselementes (11) mit dem Nutgrund (19) verklebt ist.

7. Hochsicherheitstür gemäß einem der Ansprüche 1 bis 6, **dadurch gekennzeichnet, dass** das Dichtungselement (11) eine Hohlkammerdichtung mit mindestens zwei Kammern (17, 18, 29) ist, wobei in der der Basisfläche (20) zugewandten Kammer (17) Luft oder Gas und in der der Basisfläche (20) abgewandten Kammer (18, 29) eine Magnetleiste (23) oder eine ferromagnetische Leiste angeordnet ist.

8. Hochsicherheitstür gemäß Anspruch 7, **dadurch gekennzeichnet, dass** die Hohlkammerdichtung an einer dem Nutgrund (19) der Nut (16) zugewandten Basisfläche (20) sowie an Teilbereichen (21) ihrer beiden Seitenflächen mit der Nutwandung verklebt ist, wobei sich die Teilbereiche (21) vom Nutgrund (19) aus maximal über eine Breite (B) erstrecken, die der Breite eines dem Nutgrund (19) zugewandten Steges (22) der Hohlkammerdichtung entspricht.

9. Hochsicherheitstür gemäß einem der Ansprüche 1 bis 7, **dadurch gekennzeichnet, dass** zwischen dem Dichtungselement (11) und dem Anschlag oder dem Randbereich (9) des Türblatts (2) eine umlaufende Prüfrille (32) angeordnet ist, die über eine Leitung (34) mit einem Dichtheitsprüfgerät (35) verbunden ist, wobei die Leitung (34) mit einer Schnellverschlusskupplung (36) zum Absperren derselben versehen ist.

10. Hochsicherheitstür gemäß Anspruch 9, **gekennzeichnet durch** zwei umlaufende Magnetleisten (23) oder ferromagnetische Leisten, wobei eine rechts und eine links der Prüfrille (32) angeordnet ist.

11. Hochsicherheitstür gemäß einem der Ansprüche 1 bis 10, **dadurch gekennzeichnet, dass** das Dichtungselement (11) durch Abschnitte gebildet ist, wobei zwei in den Ecken (6) des Türblatts (2) aneinanderstoßende Abschnitte jeweils auf Gehrung geschnitten und dicht verklebt sind.

12. Hochsicherheitstür gemäß einem der Ansprüche 1 bis 11, **gekennzeichnet durch** eine Identifikations- und/oder Zutrittskontrolle.
